Europäisches Patentamt

European Patent Office

Office européen des brevets

(19)

(11)     EP 1 430 276 B1

(12)                    EUROPÄISCHE PATENTSCHRIFT

(45) Veröffentlichungstag und Bekanntmachung des
     Hinweises auf die Patenterteilung:
     **07.06.2006  Patentblatt 2006/23**

(51) Int Cl.:
     ***G01G 19/08*** (2006.01)

(21) Anmeldenummer: **02772115.8**

(86) Internationale Anmeldenummer:
     **PCT/EP2002/008616**

(22) Anmeldetag: **02.08.2002**

(87) Internationale Veröffentlichungsnummer:
     **WO 2003/029764 (10.04.2003 Gazette 2003/15)**

(54) **VERFAHREN ZUR ERMITTLUNG DER MASSE EINES KRAFTFAHRZEUGS UNTER BERÜCKSICHTIGUNG UNTERSCHIEDLICHER FAHRSITUATIONEN**

METHOD FOR DETERMINING THE MASS OF A MOTOR VEHICLE WHILE TAKING INTO ACCOUNT DIFFERENT DRIVING SITUATIONS

PROCEDE DE DETERMINATION DE LA MASSE D'UN VEHICULE AVEC PRISE EN COMPTE DE DIFFERENTES SITUATIONS DE CONDUITE

(84) Benannte Vertragsstaaten:
     **DE FR GB IT SE**

(30) Priorität: **28.09.2001  DE 10148091**

(43) Veröffentlichungstag der Anmeldung:
     **23.06.2004  Patentblatt 2004/26**

(73) Patentinhaber: **Bayerische Motoren Werke
     Aktiengesellschaft
     80809 München (DE)**

(72) Erfinder:
     • **FLECHTNER, Horst
       85748 Garching (DE)**
     • **PAULY, Axel
       85757 Karlsfeld (DE)**

(56) Entgegenhaltungen:
     **EP-A- 0 932 033        DE-A- 10 039 458
     DE-A- 19 603 430        DE-A- 19 704 954
     DE-A- 19 724 092        DE-A- 19 755 112
     DE-A- 19 757 446        DE-A- 19 955 094
     US-A- 5 832 400**

**Beschreibung**

Die Erfindung betrifft ein Verfahren zur Ermittlung der Masse eines Kraftfahrzeugs unter Berücksichtigung unterschiedlicher Fahrsituationen mit Auswertung der jeweiligen Fahrzeug-Beschleunigung, wobei neben der Antriebskraft eines Fahrzeug-Antriebsaggregats die jeweiligen Widerstandskräfte, resultierend aus rotatorischen Kräften, aus dem Luftwiderstand, aus dem Rollwiderstand und aus der Hangabtriebskraft, berücksichtigt werden. Zum technischen Umfeld wird neben der DE 197 28 867 A1 und der EP 0 932 033 A1 insbesondere auf die DE 197 24 092 A1 verwiesen.

Beispielsweise für komplexere, in der Entwicklung befindliche Fahrwerkregelsysteme ist es erwünscht bzw. erforderlich, Kenntnisse über die aktuelle Masse bzw. das aktuelle Gewicht eines Kraftfahrzeugs, auch eines Personenkraftwagens, vorliegen zu haben. Naturgemäß kann das Gesamtgewicht eines bestimmten Fahrzeugs in Abhängigkeit vom Beladungszustand und vom Füllstand insbesondere des Kraftstoff-Vorratsbehälters über einen relativ weiten Bereich unterschiedlich sein. Die auf den ersten Blick einfachste Lösung zur Bestimmung des Fahrzeug-Gewichts mittels geeignet in den Radaufhängungen angebrachter Kraftmessfühler ist für einen Serieneinsatz u.a. aus Kostengründen nicht realisierbar. Gleiches gilt bezüglich einer Druckmessung in einem Fahrzeug-Luftfedersystem, falls das Fahrzeug überhaupt mit einem Luftfedersystem ausgerüstet ist.

Beispielsweise aus den o.g. Schriften ist ein anderer Ansatz bekannt, der bislang jedoch nur für Nutzkraftfahrzeuge, d.h. Lastkraftwagen o.ä. erprobt wurde. Bei der erstgenannten DE 197 28 867 A1 wird ein die Fahrzeugmasse repräsentierender Massewert eines mit einer Antriebseinheit ausgestatteten Nutzkraftfahrzeugs ermittelt, indem wenigstens ein erster sowie ein zweiter Beschleunigungswert des Fahrzeugs erfasst wird. Diese Beschleunigungswerte repräsentieren die Fahrzeugbeschleunigung zu einem ersten und einem zweiten Zeitpunkt, zu denen auch die Antriebskraft oder das Antriebsmoment repräsentierende Antriebswerte erfasst werden. Wenigstens abhängig von den erfassten Beschleunigungswerten und den erfassten Antriebswerten wird dann wenigstens ein erster und ein zweiter Fahrwiderstandswert bestimmt. Dabei geschieht die Ermittlung des Fzg.-Massewertes abhängig von einem Vergleich wenigstens des bestimmten ersten Fahrwiderstands- oder Masseschätzwerts mit dem bestimmten zweiten Fahrwiderstands- oder Masseschätzwert. Durch diesen Vergleich kann eine Fahrbahnneigung erkannt werden, wodurch eine durch die Fahrbahnneigung bedingte fehlerhafte Masse-Bestimmung vermieden werden soll.

Nach der oben letztgenannten DE 197 24 092 A1 wird die Fahrzeugmasse eines Nutzkraftfahrzeugs mit einem Zugfahrzeug und einem Anhänger bzw. Auflieger, das eine betätigbare Bremseinrichtung, die auf die Räder des Zugfahrzeugs und Anhängers/Aufliegers wirkt, ebenfalls über die Fahrzeugbeschleunigung ermittelt. Erfasst wird ein erster Beschleunigungswert, der die Fahrzeugbeschleunigung vor einer Betätigung der Bremseinrichtung repräsentiert und wenigstes ein zweiter Beschleunigungswert, der die Fahrzeugbeschleunigung nach einer Betätigung der Bremseinrichtung repräsentiert. Die Fahrzeugmasse bzw. ein die Fahrzeugmasse repräsentierendes Signal wird dann in Abhängigkeit von dem ersten und zweiten erfassten Beschleunigungswert ermittelt bzw. erzeugt, wobei in der sog. Impulsbilanz zusätzlich die aufgebrachte Bremskraft berücksichtigt wird.

Aus der eingangs zweitgenannten EP 0 932 033 A1 ist es bekannt, dass zur Bestimmung der Masse eines Kraftfahrzeugs die Signale für die Vortriebskraft und für die zugehörige Fzg.-Längsbeschleunigung in kontinuierlich mit konstanten Zeitabständen aufeinander folgenden Zeitpunkten erfasst und in einem Speicher abgespeichert werden, so dass ein fortlaufendes aktualisiertes mit der Fahrzeugmasse korreliertes Signal zur Optimierung der Regelungssysteme des Fahrzeugs zur Verfügung steht, so dass diese Systeme insbesondere rasch auf Änderungen der Fahrzeugmasse reagieren können.

Aus der Tatsache, dass diese bekannten Masse-Ermittlungsverfahren oder Masse-Schätzverfahren nur für relativ schwere Nutzkraftfahrzeuge erprobt sind, kann geschlossen werden, dass diese Verfahren relativ ungenau arbeiten, d.h. eine relativ große Streuung der Messergebnisse aufweisen, was jedoch bei schweren Nutzkraftfahrzeugen, deren Leergewicht und Beladungsgewicht sich erheblich voneinander unterscheiden, toleriert werden kann. Deutlich genauere Ergebnisse sollten derartige Verfahren jedoch bei Personenkraftwagen liefern, da andernfalls eine derartige Berechnung praktisch nicht durchgeführt werden müsste, sondern einfach ein Näherungswert, der aus dem Leergewicht sowie einer mittleren Zuladung gebildet wird, verwendet werden könnte.

Aufgabe der vorliegenden Erfindung ist es somit, ein Verfahren zur Ermittlung der Masse eines Kraftfahrzeugs nach dem Oberbegriff des Anspruchs 1 dahingehend weiterzubilden, dass eine ausreichend genaue Masse-Abschätzung praktisch nur aus denjenigen Informationen, die bereits im Fahrzeug vorliegen bzw. durch geeignete Sensor- oder Signalauswertung gewonnen werden können, ermöglicht wird.

Eine erste Lösung dieser Aufgabe ist dadurch gekennzeichnet, dass eine Vielzahl unterschiedlicher Fahrsituationen ausgewertet wird und die einzelnen Resultate jeweils gespeichert und zu einem gesamtheitlichen Massenwert zusammengefasst werden und dass die Bremskraft aus dem jeweiligen Bremsdruck unter Berücksichtigung eines geschätzten Reibwertes zwischen Bremsbelag und Bremsscheibe oder dgl. ermittelt wird, wobei zur Abschätzung des Reibwertes aus der Auswertung von Beschleunigungsvorgängen des Fahrzeugs ohne Bremskraft eine Fahrzeugmasse angenommen wird, anhand derer aus einer folgenden Abbremsung, welche Rahmenbedingungen für eine brauchbare Signalqualität erfüllt, der Reibwert der Bremse abgeschätzt wird.

Eine zweite Lösung dieser Aufgabe ist dadurch gekennzeichnet, dass eine Vielzahl unterschiedlicher Fahrsituationen ausgewertet wird und die einzelnen Resultate jeweils gespeichert und zu einem gesamtheitlichen Massenwert zusammengefasst werden, und dass die Bremskraft aus einem Vergleich mit dem während des Bremsvorgangs zurückgelegten Weg ermittelt wird.

Zunächst können praktisch sämtliche Fahrzustände des Fahrzeugs für eine Auswertung insbesondere eines gesamtheitlichen Ansatzes, mit Hilfe dessen die Fahrzeugmasse bestimmt werden kann, herangezogen werden. Insbesondere kann nicht nur eine positive Beschleunigung in der (Horizontal)-Ebene, sondern auch eine negative Beschleunigung, d.h. ein Abbremsvorgang, berücksichtigt werden. Insbesondere soll auch eine Auswertung unter Einwirkung einer Hangabtriebskraft möglich sein, d.h. wenn das Fahrzeug nicht in der (Horizontal-)Ebene, sondern bergauf oder bergab bewegt wird. Eine bevorzugte Methode zur Ermittlung der entsprechenden Steigung oder des entsprechenden Gefälles, d.h. des Neigungswinkels gegenüber der Horizontal-Ebene ist im später noch erläuterten abhängigen Anspruch 5 angegeben.

Mithilfe des sog. gesamtheitlichen Ansatzes kann immer dann, wenn zumindest für eine geringe Zeitspanne ein quasistationärer Zustand vorliegt, insbesondere ein solcher mit einer im wesentlichen konstanten Fzg.-Beschleunigung - hierunter ist auch die Beschleunigung des Fahrzeugs in geodätischer Vertikalrichtung zu verstehen - , die Fahrzeugmasse bzw. ein diese repräsentierender Wert berechnet werden. Hierdurch stehen binnen kürzester Zeit und insbesondere ohne dass sich in dieser Zeit die Fzg.-Masse nennenswert ändern konnte, eine Vielzahl von gewonnenen Werten für die Fahrzeugmasse zur Verfügung. Diese Werte können dann geeignet weiterverarbeitet, im einfachsten Fall gemittelt werden, um einen relativ exakten Schätzwert für die Fahrzeugmasse zu erhalten.

Zur Qualitäts-Steigerung des Ermittlungs-Ergebnisses können unterschiedliche Fahrzustände unterschiedlich stark gewichtet in die Ermittlung der gesamtheitlich berechneten Fzg.-Masse eingehen. Beispielsweise können Fahr-Zustände, in denen das Fzg. eine positive Beschleunigung erfährt, zumindest bei vollständig eingefahrenem Antriebsaggregat, d.h. wenn dieses keine übermäßigen Reibungsverluste mehr aufweist und somit seinen üblichen Wirkungsgrad erreicht hat, stärker gewichtet berücksichtigt werden, als Abbremsvorgänge, insbesondere wenn die Größe des Reibwerts zwischen Bremsscheibe und Bremsbelag bspw. aufgrund hoher Temperaturen zweifelhaft ist. Umgekehrt kann bei noch nicht vollständig eingefahrenem Antriebsaggregat das aus einer positiven durch dieses Antriebsaggregat hervorgerufenen Beschleunigung gewonnene Ergebnis geringer gewichtet werden, als bspw. das durch eine positive Fzg.-Beschleunigung, die aus einer Hangabtriebskraft resultiert, gewonnene Ergebnis für die Fzg.-Masse.

Grundsätzlich können somit bei der Gewichtung auch Faktoren wie die Betriebstemperatur von Antriebsaggregat und Getriebe, die im Zusammenhang mit anderen Einflussparametern deren Wirkungsgrad beeinflussen, berücksichtigt werden. Ein weiterer Aspekt bei der Gewichtung kann die jeweils aktuelle Fahrsituation sein, denn je nach auswertbarer Zeitdauer und auftretender Vertikal-, Längs- sowie Querdynamik kann die Zuverlässigkeit der Abschätzung variieren. Weitere Faktoren mit Einfluss auf die Gewichtung sind die Kurvenradien und der Einsatz von Fahrdynamikregelsystemen.

Im Detail kann die Fahrzeuggesamtmasse nach folgendem Ansatz abgeschätzt werden:

$$F = m * a_{eff} = F_{Motor} - F_{rot} - F_{Luftwiderstand} - F_{Rollwiderstand} - F_{Steigung} - F_{Brems} ,$$

wobei "F" für eine Kraft steht, "m" die Fahrzeugmasse darstellt und "$a_{eff}$" die effektive Beschleunigung des Fahrzeugs wiedergibt. Die Antriebskraft des Fzg.-Antriebsaggregates ist "$F_{Motor}$", die wirksamen rotatorischen Kräfte sind in "$F_{rot}$" enthalten und der Luftwiderstand des Fahrzeugs wird in der Größe "$F_{Luftwiderstand}$" berücksichtigt. Der Rollwiderstand des Fahrzeugs geht über "$F_{Rollwiderstand}$" in den obigen Ansatz ein, während eine Hangabtriebskraft über den Term "$F_{Steigung}$" und die jeweilige Bremskraft durch "$F_{Brems}$" berücksichtigt wird.

Durch Umstellung des obigen Ansatzes ergibt sich:

$$m = ( F_{Motor} - F_{rot} - F_{Luftwiderstand} - F_{Brems} ) / ( dv/dt + g \cdot \sin(\beta) + g \cdot c_{Roll} ),$$

wobei anstelle der Beschleunigung "$a_{eff}$" das zeitliche Differential der Fzg.-Geschwindigkeit "v" gesetzt ist, "$c_{Roll}$" den Rollwiderstandsbeiwert des Fahrzeugs wiedergibt und "g" für die Erdbeschleunigung (9,81 m/s$^2$) steht. Ebenso wie letztere kann der Rollwiderstandsbeiwert "$c_{Roll}$" als konstant (und im wesentlichen unabhängig von der Art des Bereifung) betrachtet werden. Der Winkel β schließlich gibt den Neigungswinkel der Fahrbahn an und repräsentiert somit die Hangabtriebskraft bzw. die Kraft "$F_{steigung}$", und zwar sowohl bei einer positiven Steigung als auch bei einem Gefälle, wenn dann für β ein negativer Wert gesetzt wird.

Nach diesem Ansatz werden je nach Fahrsituation auch der Steigungswiderstand sowie die Bremskraft bestimmt und berücksichtigt und es können verschiedene (unterschiedliche) Fahrsituationen zur Absicherung anderer Ergebnisse benutzt werden. Durch Auswertung möglichst aller vorkommender Situationen und ggf: anschließender unterschiedlicher Gewichtung (mittels geeigneter Gewichtungs-Faktoren) von mehr oder weniger vorteilhaften Fahrsituationen ist eine höhere Genauigkeit und Zuverlässigkeit der Massenabschätzung eines Fahrzeugs als im bekannten Stand der Technik erreichbar. Es wird somit vorgeschlagen, aus möglichst vielen Messungen die jeweils besten Ergebnisse gegeneinander zu vergleichen und aus diesen Betrachtungen ein besseres Ergebnis für die Fahrzeugmasse zu erhalten.

Insbesondere geht es nun um eine möglichst genaue Ermittlung der Bremskräfte, wobei die Fahrzeugbremse wie üblich als Reibungsbremse mit Bremsscheiben oder dgl. und hiermit zusammenwirkenden Bremsbelägen ausgebildet ist.

Was also die Bremskraft des obigen gesamtheitlichen Ansatzes betrifft, so ist diese aus der Kraft zwischen dem Bremsbelag bzw. dem diesen bewegenden Bremskolben und der zugehörigen Bremsscheibe oder dgl. bestimmbar. Unter Berücksichtigung des dort relevanten Reibwertes kann die am Rad wirkende Bremskraft bestimmt werden, aus der das jeweilige Bremsmoment an der Bremsscheibe und somit am jeweiligen Rad ableitbar ist und woraus sich die gesuchte Brems-Längskraft, die im obigen gesamtheitlichen Ansatz als "Bremskraft" bezeichnet ist, ergibt. Der Ansatz für diese Bremskraft lautet somit:

$$F_{Brems} = 4 \cdot p \cdot (1/r_{Rad}) \cdot (A_{K,VA} \cdot \mu_{VA} \cdot r_{Reib,VA} + A_{K,HA} \cdot \mu_{HA} \cdot r_{Reib,HA}),$$

mit "p" als hydraulischem Bremsdruck,
mit $r_{Rad}$ als Halbmesser des Fzg.-Rads (ggf. als Funktion der Fzg.-Geschwindigkeit v),
mit $A_{K,VA}$ bzw. $A_{K,HA}$ als Fläche des Bremskolbens an der Vorderachse bzw. an der Fzg.-Hinterachse,
mit $\mu_{VA}/\mu_{HA}$ als Reibwert an de Vorderachse bzw. Hinterachse, sowie mit $r_{Reib}$ als Halbmesser des jeweiligen Bremsscheiben-Reibrings. Hierbei kann noch ein Faktor für den Wirkungsgrad der Bremse an der Vorderachse (VA) und der Hinterachse (HA) berücksichtigt werden, der normalerweise in der Größenordnung von 0,95 bis 0,98 liegt. Für genauere Abschätzungen kann ein Korrekturfaktor für die geringen Druckverluste in der Bremsanlage, wie beispielsweise durch die verrichtete Arbeit am Kolbenrückholring, sinnvoll sein.

Insbesondere bei zukünftigen elektrohydraulischen Bremssystemen wird je Rad ein genaues Drucksignal "p" vorliegen, um ein Schiefziehen der Bremsen zu vermeiden. Daraus kann nach obigem Ansatz die Bremskraft relativ genau bestimmt werden, wenn eine Abschätzung für den Reibwert der Radbremse vorliegt. Der Reibwert $\mu$ hängt von der Bremsentemperatur, dem zurückliegenden Fahrstil und möglichen Aufträgen auf der Bremsscheibe bzw. allgemein auf den Reibpartnern des Bremssystems ab. Im übrigen kann auch bei künftigen neuartigen Bremsensystemen, bspw. auf elekromechanischer Basis, die Bremskraft aus der dort benötigten Zustellkraft der Beläge und deren Reibwert abgeschätzt werden.

Im übrigen können auch bei der Berücksichtigung der Bremskraft Fahrsituationen, die zu ungenauen bzw. falschen Ergebnissen führen würden, ausgeschlossen werden, bspw. mit Hilfe der weiter oben erläuterten Gewichtung bzw. eines entsprechenden Gewichtungsfaktors. So kann beispielsweise berücksichtigt werden, wenn vermutlich eine heiße bzw. überhitzte Bremse vorliegt, oder wenn man sich in der Anfangsphase eines Bremsvorganges befindet, in der bspw. erst ein Trockenbremsen der Bremsscheibe erfolgt, und weiteres mehr.

Damit sind nur noch längerfristige Schwankungen des Reibwertes zu berücksichtigen. Um diese in den Griff zu bekommen, kann aus gut brauchbaren Auswertungen von Beschleunigungsvorgängen (ohne Bremskraft) oder Bremswegabschätzungen eine Masse des Fahrzeugs angenommen werden. Aus einer darauf folgenden Abbremsung, welche die Rahmenbedingungen für gut brauchbare Signalqualität erfüllt, wird dann der Reibwert der Bremse abgeschätzt. Damit sind dann auch Abbremsungen im Komfortbereich für eine Massenschätzung auswertbar.

Die Bremskraft kann aber auch aus einem Vergleich mit dem während des Bremsvorgangs zurückgelegten Weg ermittelt werden, d.h. zunächst einmal bei Bremsungen im Komfortbereich ohne nennenswerten Schlupf ist über den Vergleich mit dem Wegsignal, d.h. dem beim Bremsen zurückgelegten Weg ein Schluss auf noch offene Parameter möglich, und zwar gemäß dem folgenden Ansatz: $(0{,}5 \cdot m \cdot \Delta v^2 = \int F_{Brems} \cdot Weg)$. In diesem Zusammenhang sei darauf hingewiesen, dass die zugehörige Wegmessung schlupffrei auch über eine Positionsbestimmung aus einem Fahrzeug-Navigationssystem erfolgen kann.

Die beschriebene Auswertung von Abbremsungen liefert bereits im Komfortbereich brauchbare Ergebnisse, so dass Auswertungen von Bremsungen nahe der Eingriffsschwelle von Regelsystemen (ABS oder dgl.) mit nicht vernachlässigbaren Schlupfwerten nicht sinnvoll ist. Außerdem müsste hier neben der exakten Bremskraftverteilung zwischen den Fzg.-Achsen der nicht bekannte Reibwert zwischen den Reifen und der Fahrbahn berücksichtigt werden. Bei Beschränkung auf den sog. Komfort-Bremsbereich kann also die Bremskraft aus dem jeweiligen Bremsdruck unter Berücksichtigung eines geschätzten Reibwertes zwischen Bremsbelag und Bremsscheibe oder dgl. ermittelt werden, so dass bevorzugt nur Bremsvorgänge ohne nennenswerten Schlupf zwischen Reifen und Fahrbahn berücksichtigt werden.

Was die wirksamen Kräfte entsprechend des obigen gesamtheitlichen Ansatzes betrifft, so ist die Antriebskraft "$F_{Motor}$" bei vielen derzeit gebauten PKWs bereits über das elektronische Fahrzeug-Bordnetz abfragbar. Die Zugkraft des Antriebsaggregats kann dabei wie folgt berechnet werden:

$$F_{Motor} = ( \, (MD\_Ind - MD\_Reib) \cdot MD\_Norm \cdot n_{ges} \cdot eta_{ges} \, ) \, / \, r_{Rad} \, ,$$

mit

| | |
|---|---|
| MD_Ind: | aktuelles Drehmoment des Antriebsaggregats [bspw. in % des Maximalwerts] |
| MD_Reib: | Verlustmomente [bspw. in %] |
| MD_Norm: | max. Drehmoment des jeweiligen Aggregattyps |
| $n_{ges}$: | Gesamtübersetzung = $n_{Getriebe} \cdot n_{HA\text{-}Getriebe}$ |
| $eta_{ges}$: | Wirkungsgrad für Getriebe und Hinterachs-Getriebe |
| und $r_{Rad}$ | Halbmesser der Fahrzeug-Räder, wobei hier für exakte Messungen die sog. Reifenaufweitung in Abhängigkeit der Fzg.-Geschwindigkeit berücksichtigt werden kann. |

Falls das Fahrzeug mit einem automatischen Schaltgetriebe ausgestattet ist, liegt üblicherweise ein spezielles Bordnetzsignal vor, das eine Information zur jeweils aktuellen Übersetzung mit aktuellem Wirkungsgrad enthält, wobei der Wirkungsgrad eines Getriebes bspw. vom zu übertragenden Moment, von der Eingangs-Drehzahl sowie von der Betriebstemperatur abhängt. Die wichtigsten Parameter sind dabei aus Kennfeldern bekannt. Bei einem Differential nimmt bekanntlich der Wirkungsgrad zusätzlich bei einer Momentenverteilung ab, so dass hier der höchste Wirkungsgrad bei Geradeausfahrt auf waagerechter Fahrbahn erreicht wird.

Die rotatorischen Kräfte "$F_{rot}$" des obigen Ansatzes können durch Abschätzung der jeweils gültigen Übersetzungen und Trägheitsmomente gewonnen werden. Zur Beschleunigung von rotierenden Massen muss nämlich die folgende Kraft aufgewendet werden: $F_{rot} = T_{ges} \cdot (dv/dt) \, / \, r^2$, wobei sich das Gesamt-Trägheitsmoment $T_{ges}$ aus den einzelnen Trägheitsmomenten, multipliziert mit dem Quadrat der jeweiligen Übersetzung, zusammensetzt, also z.B.:

$$T_{ges} = T_{Rad} + T_{HA\text{-}Getriebe} + T_{Getriebe} \cdot i_{HA\text{-}Getriebe}^{2} + T_{Motor} \cdot i_{Getriebe}^{2} \cdot i_{HA\text{-}Getriebe}^{2}$$

Die Trägheitsmomente im Antriebsstrang sind dabei für die verschiedenen Fahrzeugtypen bekannt; Abweichungen durch verschiedene Reifendimensionen und Räder sind vernachlässigbar. Der Wert für $T_{ges}$ wird je nach Vorzeichen des Momentes des Antriebsaggregats (Antreiben oder Schubbetrieb) unterschiedlich berechnet.

Dabei ist es nach der obenstehenden Gleichung egal, ob der Fahrer auskuppelt oder nicht. Für Schaltgetriebe und Automatikgetriebe liegt im Bordnetz ohnehin die Information vor, ob eine Kraftübertragung zwischen dem Antriebsaggregat und den Fzg.-Antriebsrädern stattfindet oder nicht, so dass hieraus die Höhe der rotatorischen Kräfte immer abschätzbar ist. Im Vergleich zur Bremskraft ist dieser Beitrag bei höherer Geschwindigkeit oder merklicher Verzögerung ohnehin fast vernachlässigbar. Der Reibwert der Bremse wird somit für die nächste Fahrt des Fzg.'s als Startwert abgespeichert. Deutliche Änderungen wie z.B. der Einbau einer neuen Bremse oder eine Rostschicht an den Bremsen-Reibpartnern können aus Bremsungen bei niedriger Fahr-Geschwindigkeit sicher erkannt werden. Erwähnt sei in diesem Zusammenhang, dass bspw. im Rahmen einer Fahrzeuginspektion der Wert der Fahrzeugmasse gemessen und dem System eingegeben werden kann. Bei einer anschließenden kurzen Probefahrt kann dann der Reibwert der Bremse zuverlässig bestimmt und gespeichert werden.

Der Luftwiderstand bzw. die entsprechende Kraft $F_{Luftwiderstand}$ ist für das Fahrzeug in der Größenordnung bekannt bzw. mit Hilfe des bekannten Luftwiderstandsbeiwertes, der bekannten Fzg.-Stirnfläche sowie der aktuellen Fzg.-Geschwindigkeit berechenbar; dabei können größere Fehlermöglichkeiten durch Beschränkung auf einen niedrigeren Geschwindigkeitsbereich (bspw. auf unter ca. 70 km/h) ausgeschlossen werden. Dies vermeidet auch Fehler durch Dachgepäckträger oder durch Gegenwind bzw. Rückenwind im höheren Geschwindigkeitsbereich, da bekanntlich die Kraft proportional zum Quadrat der Geschwindigkeit "v" ist.

In diesem Zusammenhang sei darauf hingewiesen, dass durchaus der Luftwiderstand des Fahrzeugs aus der Fahrdynamik bestimmt werden kann. So "bremst" beispielsweise bei einer Bergabfahrt mit hoher Geschwindigkeit ohne zusätzliche Bremskraft und sehr niedrigem Moment des Antriebsaggregats in erster Linie nur der Luftwiderstand und es ist ein Vergleich mit dem Sollwert hierfür möglich. Dieser Effekt sollte dabei über eine längere Zeitspanne und auch über alle Richtungen auftreten, d.h. ohne Störungen bspw. durch Gegenwind. Hieraus können dann bspw. Dachlasten erkannt werden bzw. es ist allgemein eine Adaption des $c_w$-Werts für andere Fahrsituationen möglich, ferner eine sehr grobe Schlussfolgerung auf die Schwerpunktshöhe des Kraftfahrzeugs.

Im übrigen hat die im vorletzten Absatz vorgeschlagene Beschränkung auf einen niedrigeren Geschwindigkeitsbereich den weiteren Vorteil, dass in diesem Geschwindigkeitsbereich auch der Rollwiderstand annähernd konstant und somit fast unabhängig von der möglichen Serienbereifung des Fahrzeugs / PKW's ist. Im übrigen kann ein deutlich erhöhter Rollwiderstand, bspw. durch Schnee auf der Fahrbahn hervorgerufen, aus Raddrehzahlvergleichen zwischen den einzelnen Rädern erkannt werden. Dies wäre dann bspw. ein Fall, in dem ein o.g. Gewichtungsfaktor für die entsprechende Masse-Ermittlung auf einen sehr niedrigen Wert gesetzt werden sollte.

In diesem Zusammenhang sei noch erwähnt, dass eine Auswertung von genügend langen Getriebe-Schaltpausen bei relativ niedriger Fzg.-Geschwindigkeit, während derer keine Antriebskraft "$F_{Motor}$" wirkt, insbesondere bei Kenntnis der Hangabtriebskraft, d.h. der Fahrbahn-Neigung (Steigung oder Gefälle) eine zwar grobe, aber zumeist ausreichend genaue Aussage zur Summe aus aktuellem Roll- und Luftwiderstand erlaubt, so dass ein entsprechender Wert für darauffolgende Berechnungen gespeichert werden kann. Im übrigen kann die Eckfrequenz der Tiefpassfilterung der Raddrehzahlsignale an die auszuwertende Situation angepasst werden, was mit reduzierter Genauigkeit auch die Auswertung relativ kurzer Fahrsituationen ermöglicht.

Was die aus dem Steigungswiderstand (bzw. aus einem Gefälle, d.h. allg. aus einer Fahrbahn-Neigung in Fahrtrichtung) resultierende Hangabtriebskraft "$F_{Steigung}$" des obigen gesamtheitlichen Ansatzes betrifft, so kann die Fahrbahnsteigung oder -Neigung relativ genau mittels eines im Fahrzeug vorhandenen Längsbeschleunigungssensors ermittelt werden. Ein derartiger Längsbeschleunigungssensor kann die in Horizontalrichtung auftretende Beschleunigung des Fahrzeugs bestimmen. Aus der Änderungsgeschwindigkeit der Fahrzeug-Rad-Drehzahl kann andererseits die in Fahrbahnrichtung auftretende Beschleunigung des Fahrzeugs einfach bestimmt werden. Werden nun diese beiden ermittelten Beschleunigungen (die negativ oder positiv sein können) zueinander in Relation gesetzt, so ist hieraus auf einfache Weise die Farbahn-Neigung in Fahrtrichtung (Steigung oder Gefälle) und somit der o.g. Neigungswinkel $\beta$ bestimmbar.

Gesteigert wird die Genauigkeit dieses Ergebnisses, wenn zusätzlich der mittels einer geeigneten Sensorik bestimmbare Nickwinkel des Fahrzeug-Aufbaus gegenüber dem Fahrwerk berücksichtigt wird. Eine entsprechende Sensorik ist bereits serienmäßig an allen Fahrzeugen / PKWs vorhanden, die entweder mit Luftfederung oder mit Xenon-Scheinwerfern ausgerüstet sind. Mit Hilfe dieser Sensorik kann der Nickwinkelfehler aus dem Steigungssignal kompensiert werden. Dies empfiehlt sich insbesondere bei komfortabel abgestimmter Fzg.-Federung im Hinblick auf eine zuverlässige Steigungserkennung, während dies bei einer sehr straffen Federungsabstimmung nicht erforderlich ist.

Insbesondere durch die Möglichkeit, eine Fahrbahn-Steigung explizit zu berücksichtigen, wird eine nochmals deutlich gesteigerte Verbesserung gegenüber dem bekannten Stand der Technik erreicht. Dabei ist diese Steigungs-Erkennung relativ günstig umsetzbar. Wenn erst einmal die Steigung bekannt ist, sind je nach aktueller Fahrsituation Schlüsse auf andere Parameter des Fahrwiderstandes möglich. Fehler des Steigungssignals durch starke Fahrwerksverspannungen bei Beschleunigung in starken Steigungen sind erkennbar und somit vermeidbar. Eine Auswertung des sog. Steigungssignals empfiehlt sich insbesondere bei längeren quasistationären Fahrsituationen, da ein auftretender Phasenversatz zwischen der Fahrzeugbeschleunigung und dem Nickwinkel zu Fehlern führen kann.

Ein großer Vorteil der Steigungsauswertung besteht ferner darin, dass auch Fahrsituationen mit sehr niedriger Beschleunigung ausgewertet werden können; bei starker Steigung sogar Fahrsituationen mit konstanter Fahr-Geschwindigkeit. Die Auswertung kleinerer Beschleunigungen in der Ebene führt nämlich auch nach Glättung des Geschwindigkeitssignals zu großen Unsicherheiten. Außerdem sind längere Fahrsituationen im passenden Geschwindigkeitsbereich im Schubbetrieb nur in Verbindung mit einem Neigungssignal zuverlässig auswertbar.

Es wurde bereits erwähnt, dass die zugehörige Wegmessung schlupffrei auch über eine Positionsbestimmung aus einem Fahrzeug-Navigationssystem erfolgen kann. Ergänzend sei darauf hingewiesen, dass mit Erreichen einer ausreichend hohen Auflösung über ein derartiges Navigationssystem, das insbesondere auch satellitengesteuert arbeiten kann ("GPS"), sogar eine Schlupfkorrektur zur Optimierung der abgeschätzten Ergebnisse aus Bremsvorgängen umgesetzt werden kann. Im übrigen kann - alternativ oder zusätzlich zum weiter oben beschriebenen Verfahren mit einem ausreichend genauen Fzg.-Navigationssystem auch die jeweilige Fahrbahnsteigung ermittelt werden bzw. ist dann die aktuelle Fahrbahnsteigung (o.g. Winkel $\beta$) aus dem Navigationssystem bekannt. Mit dieser Information kann dann das Steigungssignal im Fahrzeug abgeglichen und ggf. korrigiert werden. Mit Kenntnis der genauen Fahrbahnsteigung ist es weiterhin möglich, in Verbindung mit einem in der Ebene gewonnenen Massenschätzwert in der Steigung oder im Gefälle grobe Rückschlüsse auf die aktuelle Schwerpunktshöhe des Kraftfahrzeugs zu ziehen, sofern die Fahrwerksabstimmung (individuelle Federkennlinien) aus dem Fzg.-Bordnetz bekannt ist.

Insgesamt stehen somit mehrere, zumindest zwei voneinander im wesentlichen unabhängige Massenschätzwerte zur Verfügung, was die Zuverlässigkeit des entsprechenden Signals bei Berücksichtigung der Randbedingungen gegenüber dem bekannten Stand der Technik wesentlich erhöht. Beispielsweise kann ein erster Masse-Schätzwert im Rahmen einer längeren Konstant-Beschleunigung in der Horizontalebene, z.B. während einer Autobahn-Einfahrt, ermittelt werden. Beispielsweise kann ein zweiter Schätzwert für die Fahrzeug-Masse beim Befahren einer konstanten Fahrbahnneigung (im Sonderfall ohne damit verbundener Geschwindigkeitsänderung) ermittelt werden. Insbesondere kann ein dritter Schätzwert für die Fahrzeug-Masse beim Abbremsen mit im Sonderfall konstanter Verzögerung ermittelt werden. All diese und weitere Schätzwerte können geeignet berücksichtigt, ggf. unterschiedlich stark gewichtet und geeignet miteinander verglichen werden, um ein möglichst genaues Resultat für die Masse des Fahrzeugs zu erlangen.

Im übrigen kann je nach Signalqualität der Antriebskraft-Schätzung ein Offset auf der Schätzung aus einer Bremsung oder umgekehrt für eine Fahrt korrigiert werden. Diese gegenseitige Korrektur ist vorteilhaft, da z.B. ein Fehler des Antriebsmomentes des Antriebsaggregats von nur 5% bei einem üblichen PKW zu einer Abweichung der Massenschätzung um ca. 150 kg führen kann. Ähnliche Toleranzen gelten auch beim Bremsenreibwert für die Auswertung von Verzögerungen. Die beste Abgleichmöglichkeit ergibt sich aus einer auch nur kurzen ungebremsten Fahrsituation in größerem Gefälle mit nur geringem Antriebsmoment, da hier als beschleunigende Kraft nur die konstante Erdanziehung wirkt und andere Parameter von Antrieb und Bremse fast vernachlässigbar sind.

Die so gefundenen Masse-Schätzwerte können über zusätzliche im Bordnetz des Fzg's vorhandene Signale plausibilisiert werden. Beispielsweise kann ein Fahrzeug nicht leichter sein als die Summe aus seinem Leergewicht plus den Betriebsstoff-Füllständen plus einem Mindestgewicht für den Fzg.-Fahrer. Mittels einer Sitzbelegungserkennung können weitere Passagiere oder auch Kindersitze berücksichtigt werden. In gleicher Weise ist im Bordnetz einfach erkennbar, ob ein Anhänger gezogen wird. Jedoch kann in diesem Fall kann nur ein grober Wert für die Gesamtmasse des Gespannes abgeschätzt werden, da sämtliche Kennwerte des Anhängers über einen weiten Bereich streuen können. Die Differenz aus diesem Ergebnis und einer Schätzung des Fahrzeuggewichtes aus Leergewicht, Füllständen und Sitzbelegungsinformationen liefert bei Beschleunigungsmessungen im niedrigen Geschwindigkeitsbereich ein zumindest grobes Signal für die Masse des Fahrzeuganhängers.

Mit Hilfe dieser Daten kann auch ein grober Korrekturfaktor für den Luftwiderstand und den Rollwiderstand bei höheren Fzg.-Geschwindigkeiten gewonnen werden. Eine Berücksichtigung des Lenkwinkels oder von Daten des Fzg.-Navigationssystems erlaubt die Vermeidung grober Fehler durch Rückenwind oder Gegenwind. Im übrigen ist eine erfindungsgemäße Auswertung beim Durchfahren enger Kurven wegen mehrerer zusätzlicher Einflussparameter zumindest derzeit weniger sinnvoll. Bedeutend ist, dass die beschriebene Masse-Abschätzung kontinuierlich durchgeführt werden, d.h. mitlaufen kann, derart, dass das Häufigkeitsmaximum abzüglich erkennbarer Offsets dem wahrscheinlichsten Wert der Fahrzeug-Masse entspricht, wobei noch darauf hingewiesen sei, dass durchaus eine Vielzahl von Details abweichend von obigen Erläuterungen gestaltet sein kann, ohne den Inhalt der Patentansprüche zu verlassen.

**Patentansprüche**

**1.**  Verfahren zur Ermittlung der Masse eines Kraftfahrzeugs unter Berücksichtigung unterschiedlicher Fahrsituationen mit Auswertung der jeweiligen Fahrzeug-Beschleunigung, wobei neben der Antriebskraft eines Fahrzeug-Antriebsaggregats die jeweiligen Widerstandskräfte, resultierend aus rotatorischen Kräften, aus dem Luftwiderstand, aus dem Rollwiderstand und aus der Hangabtriebskraft, und zusätzlich Bremskräfte an den Fzg.-Reibungsbremsen berücksichtigt werden,

**dadurch gekennzeichnet, dass** eine Vielzahl unterschiedlicher Fahrsituationen ausgewertet wird und die einzelnen Resultate jeweils gespeichert und zu einem gesamtheitlichen Massenwert zusammengefasst werden, wobei entweder

a) die Bremskraft aus dem jeweiligen Bremsdruck unter Berücksichtigung eines geschätzten Reibwertes zwischen Bremsbelag und Bremsscheibe oder dgl. ermittelt wird, wobei zur Abschätzung des Reibwertes aus der Auswertung von Beschleunigungsvorgängen des Fahrzeugs ohne Bremskraft eine Fahrzeugmasse angenommen wird, anhand derer aus einer folgenden Abbremsung, welche Rahmenbedingungen für eine brauchbare Signalqualität erfüllt, der Reibwert der Bremse abgeschätzt wird, oder

b) die Bremskraft ($F_{Brems}$) aus einem Vergleich mit dem während des Bremsvorgangs zurückgelegten Weg unter Zuhilfenahme des folgenden Ansatzes ermittelt wird:

$$0{,}5 \cdot m \cdot \Delta v^2 = \int F_{Brems} \cdot Weg$$

mit m= Fahrzeugmasse, $\Delta v$ = beim Bremsen erzielte Geschwindigkeitsänderung.

**2.**  Verfahren nach Anspruch 1,

**dadurch gekennzeichnet, dass** nur Bremsvorgänge ohne nennenswerten Schlupf zwischen Reifen und Fahrbahn berücksichtigt werden.

3. Verfahren nach einem der vorangegangenen Ansprüche, **dadurch gekennzeichnet, dass** bei der Ermittlung des gesamtheitlichen Massenwertes unterschiedliche Fahrsituationen unterschiedlich gewichtet werden.

4. Verfahren nach einem der vorangegangenen Ansprüche, **dadurch gekennzeichnet, dass** zur Berücksichtigung der Hangabtriebskraft die jeweilige Fahrbahnsteigung ermittelt wird, indem mittels eines im Fahrzeug vorhandenen Längsbeschleunigungssensors die in Horizontalrichtung auftretende Beschleunigung bestimmt und in Relation zur in Fahrbahnrichtung auftretenden Beschleunigung gesetzt wird und dass zusätzlich der mittels einer geeigneten Sensorik bestimmbare Nickwinkel des Fahrzeug-Aufbaus berücksichtigt wird.

5. Verfahren nach einem der vorangegangenen Ansprüche, **dadurch gekennzeichnet, dass** die jeweilige Fahrbahnsteigung und/oder die während eines Bremsvorgangs zurückgelegte Wegstrecke aus einem Fahrzeug-Navigationssystem ermittelt wird.

**Claims**

1. A method for determining the mass of a motor vehicle while taking into account different driving situations, comprising the evaluation of the respective vehicle acceleration, wherein, in addition to the driving force of a vehicle drive unit, the respective resistance forces, resulting from rotational forces, the air resistance, the rolling resistance and the slope descending force, and, in addition, braking forces on the vehicle's friction brakes, are taken into account, **characterised in that** a plurality of different driving situations is evaluated and the individual results stored in leach case and combined to form a collective mass value, wherein either

   a) the braking force is determined from the respective braking pressure taking into account an estimated coefficient of friction between the brake lining and brake disc or the like, wherein to estimate the coefficient of friction from the evaluation of acceleration operations of the vehicle without braking force, a vehicle mass is assumed, with the aid of which, the coefficient of friction of the brake is estimated from a subsequent deceleration, which meets boundary conditions for a useable signal quality, or
   b) the braking force ($F_{brake}$) is determined from a comparison with the path covered during the braking operation with the aid of the following approach:

$$0.5 * m * \Delta v^2 = \int F_{brake} * path$$

   wherein m = vehicle mass, $\Delta v$ = speed change achieved during braking.

2. A method according to claim 1, **characterised in that** only braking ;operations without significant slippage between the tyres and road are taken into account.

3. A method according to any one of the preceding claims, **characterised in that** in determining the collective mass value, different driving situations are weighted differently.

4. A method according to any one of the preceding claims, **characterised in that** the respective road incline is determined to take into account the slope descending force, **in that** the acceleration occurring in the horizontal direction is determined by means of a longitudinal acceleration sensor present in the vehicle and is related to the acceleration occurring in the road direction and **in that** the vehicle body pitch angle which can be determined by means of a suitable sensor system is additionally taken into account.

5. A method according to any one of the preceding claims, **characterised in that** the respective road inclination and/or the path covered during a braking operation is determined from a vehicle navigation system.

**Revendications**

1. Procédé de détermination de la masse d'un véhicule avec prise en compte de différentes situations de conduite et évaluation de l'accélération du véhicule, selon lequel, outre la force motrice d'un groupe moteur, les forces de résistance résultant de forces de rotation, de la résistance de l'air, de la résistance au roulement et de la force de déclivité, ainsi que des forces de freinage sur les freins à friction du véhicule sont prises en compte,
   **caractérisé en ce qu'**
   une multitude de situations de conduite différentes sont évaluées et les différents résultats mémorisés et synthétisés en une valeur de masse globale, selon laquelle

   a) soit la force de freinage est déterminée à partir de la pression de freinage en tenant compte d'un coefficient de friction estimé entre la garniture de frein et le disque de frein ou autre, une masse du véhicule, le coefficient de friction du frein étant estimé à partir d'une opération de freinage ultérieure qui remplit les conditions générales pour une qualité de signal utilisable admise pour estimer le coefficient de friction à partir de l'évaluation d'opérations d'accélération du véhicule sans force de freinage,
   b) soit la force de freinage ($F_{frein}$) est déterminée à partir d'une comparaison avec le trajet parcouru pendant l'opération de freinage à l'aide de l'équation suivante :

   $$0{,}5 * m * \Delta v^2 = \int F_{frein} * \text{trajet}$$

   où m = masse du véhicule et $\Delta v$ = changement de vitesse obtenu lors du freinage.

2. Procédé selon la revendication 1,
   **caractérisé en ce que**
   seules des opérations de freinage sans glissement notable entre les pneumatiques et la chaussée sont prises en compte.

3. Procédé selon une des revendications précédentes,
   **caractérisé en ce que**
   différentes situations de conduite sont pondérées différemment lors de la détermination de la valeur de masse globale.

4. Procédé selon une des revendications précédentes,
   **caractérisé en ce que**
   pour prendre en compte la force de déclivité, la pente de la chaussée est déterminée, l'accélération se produisant dans le sens horizontal étant déterminée au moyen d'un capteur d'accélération longitudinale présent dans le véhicule et mise en relation avec l'accélération se produisant dans le sens de la chaussée, et en outre l'angle de tangage de la structure du véhicule est déterminé à l'aide d'un équipement de détection approprié.

5. Procédé selon une des revendications précédentes,
   **caractérisé en ce que**
   la pente de la chaussée correspondante et/ou le trajet parcouru pendant une opération de freinage sont déterminés à l'aide d'un système de navigation du véhicule.